# EUROPÄISCHE PATENTSCHRIFT

(11) **EP 3 548 772 B1**
(45) Veröffentlichungstag und Bekanntmachung des Hinweises auf die Patenterteilung: **23.09.2020**
(21) Anmeldenummer: 17798205.5
(22) Anmeldetag: 15.11.2017
(51) Int. Cl.: F16H 15/38

(54) **TRAKTIONSGETRIEBE UND ANTRIEBSEINHEIT FÜR EIN KRAFTFAHRZEUG**
TRACTION TRANSMISSION AND DRIVE UNIT FOR A MOTOR VEHICLE
TRANSMISSION À TRACTION ET UNITÉ D'ENTRAÎNEMENT POUR UN VÉHICULE AUTOMOBILE

(30) Priorität: 01.12.2016 DE 102016223922
(43) Veröffentlichungstag der Anmeldung: 09.10.2019
(73) Patentinhaber: Volkswagen Aktiengesellschaft, 38440 Wolfsburg (DE)
(72) Erfinder: PETERSEN, Rainer, 38444 Wolfsburg (DE); MÖCKEL, Jörg, 38524 Sassenburg (DE)
(86) Internationale Anmeldenummer: PCT/EP2017/079335
(87) Internationale Veröffentlichungsnummer: WO 2018/099722

(56) Entgegenhaltungen:
- JP-A- H06 185 590
- JP-A- 2010 190 381
- US-A- 2 057 136
- US-A- 2 140 012

## Beschreibung

Die Erfindung bezieht sich auf ein Traktionsgetriebe mit einem ersten und einem zweiten Teilgetriebe, die spiegelsymmetrisch zueinander aufgebaut und axial benachbart in einem Gehäuse angeordnet sind, jeweils umfassend
- eine axial innere Antriebs-Reibscheibe und eine axial äußere Gegen-Reibscheibe, die koaxial angeordnet und relativ zueinander um eine Getriebe-Zentralachse rotierbar sind, sowie
- einen Satz zwischen den Reibscheiben kraftschlüssig kontaktierter Reibroller, die rotierbar um jeweils eine Rollerachse gelagert sind, wobei die Rollerachsen an einem in Bezug auf die Getriebe-Zentralachse axial bewegbaren, sternförmigen Steg, radial von der Getriebe-Zentralachse beabstandet schwenkgelagert sind,
wobei die Stege auf einer gemeinsamen Steghülse angeordnet und über genau eine axial erstreckte Gewindepaarung abstandsvariabel miteinander gekoppelt sind, wobei
- die Gegen-Reibscheiben fest auf einer gemeinsamen, axial fest und rotierbar im Gehäuse gelagerten Abtriebswelle angeordnet sind,
- der Abstand der Antriebs-Reibscheiben voneinander mittels einer Abstand-Stelleinrichtung variierbar ist und
- die Steghülse relativ zum Gehäuse axial verschieblich gelagert ist,
wobei der dem ersten Teilgetriebe zugeordnete, erste Steg drehfest mit dem Gehäuse verbunden ist, der dem zweiten Teilgetriebe zugeordnete, zweite Steg mittels einer Winkellagen-Stelleinrichtung relativ zum Gehäuse verdrehbar ist und die die Stege koppelnde Gewindepaarung derart eingerichtet ist, dass eine Relativverdrehung der Stege eine Änderung deren Abstandes bewirkt.

Die Erfindung bezieht sich weiter auf eine Antriebseinheit für ein Kraftfahrzeug, umfassend ein solches Traktionsgetriebe sowie eine elektrische Maschine mit einem Stator und einem radial innerhalb des Stators drehbeweglich gelagerten Rotor.

Traktionsgetriebe und Antriebseinheiten der vorbezeichneten Art sind in der nicht vorveröffentlichten deutschen Patentanmeldung DE 10 2016 111 740.4 und in der JP2010190381 beschrieben.

Die grundsätzliche Form eines Traktionsgetriebes mit zwei um eine gemeinsame Scheibenachse rotierbaren Reibscheiben, zwischen deren einander gegenüberliegenden, konkaven Reibflächen Reibroller kraftschlüssig eingespannt sind, ist seit langem bekannt. Unter Variation des Rollerwinkels lassen sich dabei stufenlos unterschiedliche Übersetzungen zwischen den Reibscheiben realisieren. Im Fall herkömmlicher Toroidgetriebe sind die konkaven Reibflächen der Reibscheiben kalottenförmig ausgebildet. Dies führt jedoch zu einer Bohrbewegung an der Kontaktstelle zwischen Roller und Reibfläche, d.h. zu einer rotativen Bewegungskomponente um die Kontaktnormale.

Dem Fachmann ist eine Bedingung bekannt, bei deren Realisierung die Bohrbewegung verschwindet. Dies ist der Fall, wenn sich die Rollerachse, die Scheibenachse und die Mantellinie der Kontaktstelle zwischen Roller und Reibfläche in einem Punkt schneiden. Unter der Mantellinie der Kontaktstelle versteht man die zur Kontaktnormalen Senkrechte in der von der Rollerachse und der Scheibenachse aufgespannten Schnittebene. Traktionsgetriebe, die, anders als herkömmliche Toroidgetriebe, diese Bedingung in allen Schwenkstellungen der Roller realisieren, sind dem Fachmann als sog. Traktrix-Getriebe bekannt, wie sie in der WO 2009/146748 A1 beschreiben sind. Eine ebenfalls bohrbewegungsfreie Alternative zum Traktrix-Getriebe ist in der eingangs erwähnten, deutschen Patentanmeldung beschrieben. Die vorliegende Erfindung wird bevorzugt mit der Reibflächenform der letztgenannten Traktionsgetriebeart umgesetzt, ist jedoch nicht auf diese beschränkt, sondern kann insbesondere auch mit herkömmlichen Toroidgetrieben in Voll- oder Halbtoroid-Bauform umgesetzt werden.

In der genannten deutschen Patentanmeldung ist eine Antriebseinheit für ein Kraftfahrzeug offenbart, die eine elektrische Maschine als ihr Antriebsaggregat umfasst. Obgleich elektrische Maschinen einen weitgehend effizienten Betrieb in einem sehr viel weiter gespreizten Drehzahlbereich im Vergleich zu Verbrennungskraftmaschinen erlauben, kann es zur Effizienzsteigerung sinnvoll sein, auch bei elektrischen Antriebseinheiten dem Antriebsaggregat eine Getriebeeinheit nachzuschalten, die, um das mit dem elektrischen Betrieb typischerweise verbundene, stufenlose Fahrgefühl nicht zu stören, als ein stufenloses Getriebe (CVT-Getriebe) ausgeführt sein sollte. In der genannten deutschen Patentanmeldung ist eine Getriebeeinheit beschrieben, die aus zwei axial spiegelsymmetrisch aufgebauten Teilgetrieben zusammengesetzt ist. Die beiden Teilgetriebe sind einander mittelbar axial benachbart, nämlich beidseitig der elektrischen Maschine angeordnet. Die einander zugewandten Seiten der Teilgetriebe werden hier als axial innen bezeichnet. Die einander abgewandten Seiten der Teilgetriebe werden hier als axial außen bezeichnet.

Axial innen ist in jedem Teilgetriebe eine mit dem Rotor verbundene Antriebs-Reibscheibe angeordnet, der am axial äußeren Ende des jeweiligen Teilgetriebes eine korrespondierende Gegen-Reibscheibe gegenüberliegt. Bei der bekannten Ausführungsform ist die Gegen-Reibscheibe drehfest am Gehäuse gelagert und kann, insbesondere mittels einer Hydraulik, axial verschoben werden. Zwischen den beiden Reibscheiben ist ein sternförmiger Steg positioniert, der eine Mehrzahl von schwenkbaren Reibrollern trägt. Die Reibroller liegen kraftschlüssig an den Reibflächen der Antriebs- bzw. der Gegen-Reibscheibe an und sind um jeweils eine tangential orientierte Schwenkachse schwenkbar. Eine Rotation der Antriebs-Reibscheibe überträgt sich kraftschlüssig auf die Reibroller und auf den Steg, wobei dessen Drehzahl von der aktuell eingestellten Getriebeübersetzung abhängt, die sich wiederum aus der Schwenkstellung der Reibroller und der Durchmesser-Relation von deren Kontaktlinien mit der Antriebs- und der Gegen-Reibscheibe ergibt. Der Steg dient somit als Abtriebs- bzw. Ausgangselement jedes Teilgetriebes.

Zur Verstellung der Getriebeübersetzung ist es erforderlich, den Steg innerhalb des ihm zugeordneten Teilgetriebes axial zu verschieben (und die Gegen-Reibscheibe mittels ihrer Hydraulik entsprechend nachzuführen). Hierbei ändert sich der Abstand der beiden Stege voneinander. Um diese Anforderungen gemeinsam zu erfüllen, sind beide Stege auf einer gemeinsamen, als Abtriebswelle dienenden Steghülse angeordnet, wobei die Steghülse jedoch aus zwei drehfest und axial verschieblich miteinander gekoppelten Axialabschnitten besteht. Diese als Hohlwellen ausgebildeten Axialabschnitte tragen in ihrem Inneren je ein Innengewinde, in welches ein gemeinsamer Gewindebolzen eingeschraubt ist. Aufgrund der spiegelsymmetrischen Gestaltung der Gewinde in den beiden Teilgetrieben führt eine Rotation des Gewindebolzens zu einer spiegelsymmetrischen Axialverschiebung der beiden Axialabschnitte der Steghülse relativ zueinander und somit zu einer symmetrischen Variation des Stegabstandes. Zur Verstellung der Winkellage des Gewindebolzens relativ zu den Axialabschnitten der Steghülse sind die Steghülse und der Gewindebolzen über ein Differenz-Getriebe, an dessen Abtriebswelle ein Stellmotor angeschlossen ist, miteinander gekoppelt. Betätigung des Stellmotors führt somit zu einer Rotation des Gewindebolzens relativ zur Steghülse, deren beide Axialabschnitte daraufhin ihren Abstand verändern, sodass sich die Stege innerhalb der jeweils zugeordneten Teilgetriebe symmetrisch zueinander verschieben, was bei geeigneter Nachführung der Gegen-Reibscheiben zu der gewünschten Übersetzungsänderung führt.

Insbesondere wegen des zur Verstellung erforderlichen Differenzgetriebes ist die beschriebene Antriebseinheit nachteilig bauraumintensiv. Hinzu kommt eine erhebliche konstruktive Komplexität, sodass die beschriebe Einheit vergleichsweise teuer ist.

Es ist die Aufgabe der vorliegenden Erfindung, ein gattungsgemäßes Traktionsgetriebe und eine gattungsgemäße Antriebseinheit derart weiterzubilden, dass der Bauraumbedarf und die konstruktive Komplexität verringert werden.

Diese Aufgabe wird in Verbindung mit den Merkmalen des Oberbegriffs von Anspruch 1 dadurch gelöst, dass die Gegen-Reibscheiben fest auf einer gemeinsamen, axial fest und rotierbar im Gehäuse gelagerten Abtriebswelle angeordnet sind, wobei
- die Gegen-Reibscheiben fest auf einer gemeinsamen, axial fest und rotierbar im Gehäuse gelagerten Abtriebswelle angeordnet sind,
- der Abstand der Antriebs-Reibscheiben voneinander mittels einer Abstand-Stelleinrichtung variierbar ist und
- die Steghülse relativ zum Gehäuse axial verschieblich gelagert ist,
wobei der dem ersten Teilgetriebe zugeordnete, erste Steg drehfest mit dem Gehäuse verbunden ist, der dem zweiten Teilgetriebe zugeordnete, zweite Steg mittels einer Winkellagen-Stelleinrichtung relativ zum Gehäuse verdrehbar ist und die die Stege koppelnde Gewindepaarung derart eingerichtet ist, dass eine Relativverdrehung der Stege eine Änderung deren Abstandes bewirkt.

Der grundlegende, spiegelsymmetrische Aufbau bleibt beim erfindungsgemäßen Traktionsgetriebe erhalten. Allerdings wird die funktionale Bedeutung der verschiedenen Elemente verändert. Zwar dienen die axial inneren Reibscheiben nach wie vor als Antriebs-Reibscheiben; als Abtriebs-Reibscheiben dienen erfindungsgemäß jedoch die Gegen-Reibscheiben. Diese müssen daher relativ zum Gehäuse rotierbar angeordnet sein. Allerdings ist keine axiale Verschieblichkeit der Gegen-Reibscheiben mehr erforderlich. Vielmehr sind die Gegen- bzw. Abtriebs-Reibscheiben axial fest auf einer gemeinsamen Abtriebswelle gelagert. Die jeweils nach axial außen auf die Gegen-Reibscheiben wirkenden Axialkräfte heben sich, vermittelt durch die gemeinsame Abtriebswelle, gegenseitig auf. Eine axiale Abstützung am Gehäuse kann dadurch entfallen.

Um die mit jeder Übersetzungsverstellung verbundene Abstandsvariation zwischen den Reibscheiben eines Teilgetriebes zu realisieren, müssen jedoch die Antriebs-Reibscheiben abstandsvariabel gestaltet werden. Hierzu ist es, wie weiter unten anhand bevorzugter Ausführungsbeispiele näher beschrieben werden soll, möglich, eine entsprechende Stelleinrichtung unmittelbar zwischen den einander benachbarten Antriebs-Reibscheiben anzuordnen, die sich beidseitig gegen diese Reibscheiben abstützt, sodass auch hier keine Axialkraftabstützung am Gehäuse erforderlich ist.

Schließlich ist erfindungsgemäß vorgesehen, dass die Steghülse, welche die beiden Stege trägt, als solche relativ zum Gehäuse axial verschieblich gelagert ist. Dies ist konstruktiv einfach zu bewerkstelligen, da im Kontext der Erfindung, abgesehen von eventuellen Stellverdrehungen, keine Rotation der Steghülse relativ zum Gehäuse vorgesehen ist. Es ist lediglich eine reinen Verstellzwecken dienende Relativ-Verdrehbarkeit der Stege zueinander vorgesehen, wobei diese Relativverdrehung über die Gewindekopplung in eine Abstandsänderung der Stege übersetzt wird. Hierbei sind unterschiedliche, einfache Konstruktionen denkbar.

Bei einer bevorzugten Ausführungsform der Erfindung ist vorgesehen, dass die Steghülse als in sich drehstarre Einheit ausgebildet ist und im Bereich eines Teilgetriebes ein Außengewinde trägt, auf welchem der zugeordnete Steg, der ein korrespondierendes Innengewinde trägt, aufgeschraubt ist. Insbesondere kann vorgesehen sein, dass der hier als erster Steg bezeichnete, drehfest mit dem Gehäuse verbundene Steg auch fest mit der Steghülse verbunden ist. Die Steghülse ist somit ebenfalls drehfest zum Gehäuse gelagert. Der hier als zweiter Steg bezeichnete, mittels der Winkellagen-Stelleinrichtung relativ zum Gehäuse verdrehbare Steg ist hingegen auf das Außengewinde der Steghülse aufgeschraubt. In der Terminologie von Anspruch 1 bedeutet dies, dass dasjenige Teilgetriebe, in dessen Bereich die Steghülse das Außengewinde trägt, das zweite Teilgewinde ist. Alternativ kann auch der relativ zum Gehäuse verdrehbare (zweite) Steg fest mit der Steghülse verbunden sein, während der drehfest zum Gehäuse angeordnete (erste) Steg auf die Steghülse aufgeschraubt ist. In diesem Fall würde sich die Steghülse bei einer Verdrehung des zweiten Stegs mitdrehen. Nochmals alternativ ist es auch denkbar, die Steghülse als zwei mittels eines korrespondierenden Längsgewindes miteinander verschraubte Axialabschnitte auszubilden, wobei jeder Axialabschnitt einen fest mit ihm verbundenen Steg trägt. In allen Fällen führt eine Stell-Verdrehung des zweiten Stegs zu einer Änderung des Abstandes beider Stege voneinander. Wenn durch entsprechendes axiales Nachführen der axial verschieblichen Antriebs-Reibscheiben mittels der Abstand-Stelleinrichtung der Kraftschluss zwischen den Reibscheiben und den Reibrollern erhalten bleibt, führt die Abstandsverstellung der Stege zu einer Selbstzentrierung der Steghülse bei gleichzeitiger selbsttätiger Anpassung der Reibroller-Schwenklage mit der entsprechenden Änderung der Getriebeübersetzung.

Die Erfindung liefert also ein Getriebemodul, dessen Übersetzung durch einfache Stell-Verdrehung eines Steges einstellbar ist und in dem sich sämtliche Axial- und Radialkräfte gegenseitig aufheben, sodass ein leichter, nach außen kräftefreier Einbau in eine komplexere Antriebseinheit möglich ist.

Hinsichtlich der Winkellagen-Stelleinrichtung zur Stell-Verdrehung des zweiten Stegs ist bevorzugt vorgesehen, dass die Winkellagen-Stelleinrichtung eine mit einem Stellantrieb gekoppelte, zur Getriebezentralachse koaxiale Stellhülse aufweist, die drehbeweglich am Gehäuse gelagert ist, die zugeordnete Gegen-Reibscheibe von axial außen her umgreift und nach axial innen erstreckte Stellfinger aufweist, die paarweise zwischen sich je einen über das Schwenklager einer Rollerachse radial hinausragenden Fortsatz des zugeordneten Stegs drehfixieren. Die Stellhülse kann im Wesentlichen die Form eines Hohlzylinders mit axial geschlitzter Wandung haben, wobei die Wandungsschlitze nach axial innen offen sind. Der Winkelabstand der Schlitze bzw. der sie bildenden Finger hat auf die Winkelabstände der Strahlen des sternförmigen Stegs abgestimmt zu sein. Jeder Steg-Strahl trägt, wie grundsätzlich aus dem Stand der Technik bekannt, einen schwenkbaren Reibroller. Bei der hier beschriebenen Weiterbildung der Erfindung ist vorgesehen, dass sich jeder Steg-Strahl mit einem radialen Fortsatz über das Schwenklager jedes Reibrollers hinaus erstreckt. Diese Fortsätze dienen als Ansatzstelle für die Stellhülse. Insbesondere sollen sie innerhalb eines der vorbeschriebenen Stellhülsenschlitze liegen und gleitend an den den Schlitz bildenden Fingern anliegen. Eine Rotation der Stellhülse führt über diesen Mitnehmer-Mechanismus also zu einer entsprechenden Rotation des zweiten Steges, der jedoch innerhalb des axialen Stellhülsen-Schlitzes seiner über die Gewindepaarung der Steghülse vermittelten Axialbewegung folgen kann. Die Drehfixierung des ersten Steges erfolgt vorzugsweise mittels einer ähnlichen Hülse, die in diesem Fall jedoch gehäusefest angeordnet und daher nicht als Stell- sondern als Fixierhülse anzusprechen ist.

Wie eingangs erläutert, sind die Antriebs-Reibscheiben mit einem Antriebsaggregat koppelbar. Bei einer bevorzugten Ausführungsform der Erfindung ist vorgesehen, dass (nur) eine der Antriebs-Reibscheiben eine Koppeleinrichtung zur Kopplung dieser Antriebs-Reibscheibe dem Antriebsaggregat trägt und über eine drehmomentübertragende Kupplungseinrichtung mit der anderen Antriebs-Reibscheibe verbunden ist. Grundsätzlich ist es zwar auch möglich, jede der Antriebs-Reibscheiben mit einer solchen Koppeleinrichtung zu versehen; dies scheint jedoch nur dann angezeigt, wenn keinerlei Relativrotation zwischen den beiden Antriebsscheiben beabsichtigt ist.

Bei einer besonders vorteilhaften Ausführungsform der Erfindung ist jedoch vorgesehen, dass die Kupplungseinrichtung und die Abstand-Stelleinrichtung gemeinsam als eine Wälzkörper/Rampen-Kupplung ausgebildet sind. Dieser dem Fachmann grundsätzlich bekannte Kupplungstyp kombiniert eine Drehmomentübertragung und eine Abstandsverstellung der miteinander gekoppelten Elemente (hier der Antriebs-Reibscheiben). Zwei derart gekoppelte Elemente rotieren zwar grundsätzlich mit derselben Drehzahl; bei einer Momentenänderung kommt es jedoch kurzfristig zu einer geringfügigen Relativverstellung, die bei einer separaten Kopplung jeder Antriebs-Reibscheibe mit dem Antriebsaggregat nicht möglich wäre. Aus diesem Grund wird die oben erläuterte Kopplung zwischen nur einer Antriebs-Reibscheibe und dem Antriebsaggregat bevorzugt. Eine solche Kopplung kann beispielsweise als Steckverzahnung ausgebildet sein, die zwar eine Drehmitnahme der gekoppelten Antriebs-Reibscheibe garantiert, gleichzeitig aber deren Axialverschieblichkeit nicht behindert.

Zur Ausbildung der bevorzugten Wälzkörper/Rampen-Kupplung kann vorgesehen sein, dass wenigstens eine der Antriebs-Reibscheiben an ihrer der anderen Antriebs-Reibscheibe zugewandten Fläche ein in Umfangsrichtung variierendes Rampenprofil aufweist und dass zwischen den Antriebs-Reibscheiben ein ringscheibenförmiger Käfig gelagert ist, an dem eine Mehrzahl von an dem Rampenprofil anliegenden, um jeweils eine radiale Wälzachse rotierbaren Wälzkörpern gelagert ist. Grundsätzlich denkbar wäre auch eine unmittelbare Lagerung der Wälzkörper an der nicht mit dem Rampenprofil bewehrten Reibscheibe; konstruktiv einfacher ist jedoch die hier beschriebene Variante eines separaten Käfigs als Träger der Wälzkörper. Diese Ausführungsform hat zudem den Vorteil, dass beide Antriebs-Reibscheiben an ihren einander zugewandten Flächen mit einem Rampenprofil versehen sein können, sodass ein größerer Abstandshub realisierbar ist und insbesondere in Fällen einer Momentenumkehr ein großer Totweg vermieden wird.

Der Fachmann wird anhand der obigen Erläuterungen verstanden haben, dass die Form der Rampen und die Form der Reibflächen so aufeinander abgestimmt sein sollten, dass der Abstand der Antriebs-Reibscheiben und daher auch der Abstand von Antriebs- und Gegen-Reibscheibe jedes Teilgetriebes bei jeder Winkellage der Reibroller eine korrekte Anpresskraft zwischen den Reibscheiben und den Reibrollern sicherstellt. Um auch ein anfängliches Durchrutschen beim Anfahren und/oder undefinierte Zustände zu vermeiden, ist bevorzugt vorgesehen, dass Reibscheiben und Reibroller auch im Stillstand des erfindungsgemäßen Traktionsgetriebes kraftschlüssig aneinander anliegen. Dies kann erreicht werden, indem, wie bevorzugt vorgesehen, die Antriebs-Reibscheiben mittels einer zwischen ihnen angeordneten, sich beidseitig gegen sie abstützenden Federeinrichtung in Richtung der jeweils zugeordneten Gegen-Reibscheibe vorgespannt sind. Eine solche Federeinrichtung ist vorzugsweise als ringscheibenförmige Tellerfederanordnung ausgebildet.

Bei einer bevorzugten Weiterbildung dieser Ausführungsform ist vorgesehen, dass die Tellfederanordnung eine Innenverzahnung aufweist, in die eine korrespondierende Außenverzahnung des die Wälzkörper tragenden Käfigs eingreift. Dies verkürzt zusätzlich den Totweg bei Momentenumkehr.

Wie bereits eingangs erwähnt, ist die konkrete Form der Reibflächen hier nicht erfindungsrelevant. Der beschriebene Mechanismus der Selbstzentrierung der Stege funktioniert grundsätzlich mit jeder sinnvollen Reibflächenform, wie sie für verschiedene Traktionsgetriebe bekannt sind. Im Hinblick auf die erzielbare Bohrreibungsfreiheit ist jedoch besonders bevorzugt vorgesehen, dass die Reibflächen der Reibscheiben sowie der Roller derart ausgeformt sind, dass sich unabhängig von der Schwenkstellung der Roller die Mantellinien der beiden Kontaktpunkte jedes Rollers eines Teilgetriebes mit der jeweiligen Rollerachse und der Getriebe-Zentralachse in einem Punkt schneiden. Für eine derartige Reibflächenform lässt sich kein geschlossener, analytischer Ausdruck angeben. Solche Reibscheiben lassen sich jedoch für jeden Einzelfall durch den Fachmann grundsätzlich bekannte Verfahren der analytischen Geometrie konstruieren.

Ein besonders bevorzugtes Einsatzgebiet eines erfindungsgemäßen Traktionsgetriebes ist eine Antriebseinheit eines Kraftfahrzeugs, insbesondere eine elektrische Antriebseinheit eines Elektro- oder Hybridfahrzeugs. Eine solche Antriebeinhalt umfasst typischerweise eine als Innenläufer ausgebildete elektrische Maschine mit einem Stator und einem radial innerhalb des Stators drehbeweglich gelagerten Rotor. Der Rotor weist bevorzugt eine Innensteckverzahnung auf, die mit einer Außensteckverzahnung verzahnt ist, als welche die Koppeleinrichtung des Traktionsgetriebes, insbesondere dessen einer Antriebs-Reibscheibe, ausgebildet ist. Das Traktionsgetriebe kann dabei radial innerhalb des Rotors liegen, was zu einer erheblichen axialen Bauraumeinsparung gegenüber Varianten mit axialer Anordnung von Antriebsaggregat und Getriebe führt.

Weitere Merkmale und Vorteile der Erfindung ergeben sich aus der nachfolgenden, speziellen Beschreibung und den Zeichnungen.

Es zeigen:
- Figur 1:: eine Schnittdarstellung durch eine Ausführungsform einer erfindungsgemäßen Antriebeinheit,
- Figur 2:: eine Detaildarstellung der linken Rolleraufhängung von Figur 1 in einer ersten Schwenkstellung,
- Figur 3:: die Rolleraufhängung von Figur 2 in einer zweiten Schwenkstellung,
- Figur 4:: die Rolleraufhängung von Figur 2 in einer dritten Schwenkstellung,
- Figur 5:: eine perspektivische Darstellung der Stege der Antriebseinheit von Figur 1,
- Figur 6:: eine perspektivische Darstellung einer Ausführungsform eines erfindungsgemäßen Traktionsgetriebes, insbesondere des Traktionsgetriebes der Antriebseinheit von Figur 1,
- Figur 7:: eine geschnittene, perspektivische Darstellung des Traktionsgetriebes von Figur 6 sowie
- Figur 8:: eine geschnittene, perspektivische Darstellung der Kupplungs- und Abstand-Stelleinrichtung des Traktionsgetriebes von Figur 6.

Gleiche Bezugszeichen in den Figuren deuten auf gleiche oder analoge Elemente hin.

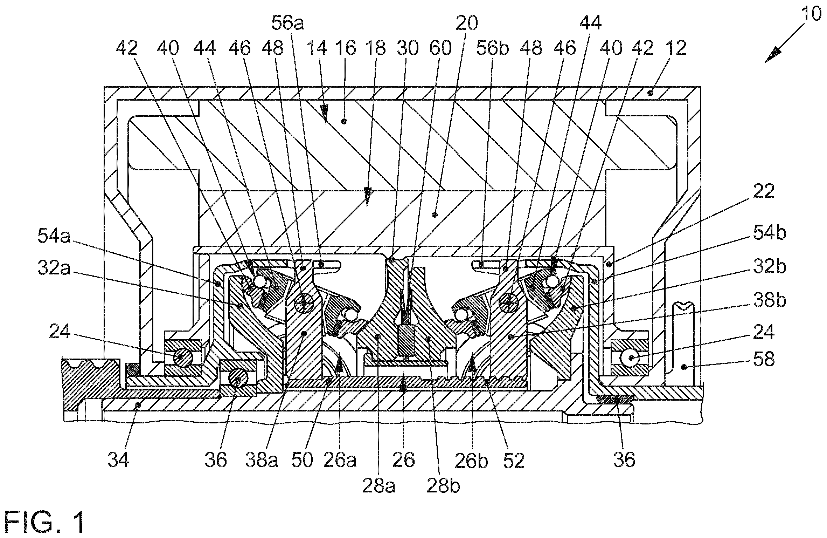

Die Figuren 1 bis 8 stellen eine Ausführungsform einer erfindungsgemäßen Antriebseinheit bzw. einzelne Komponenten derselben dar. Die nachfolgenden Erläuterungen beziehen sich insofern auf sämtliche Figuren gemeinsam. Lediglich dort, wo einzelne Aspekte in einzelnen Figuren besonders deutlich illustriert sind, soll auf diese Figuren explizit hingewiesen werden.

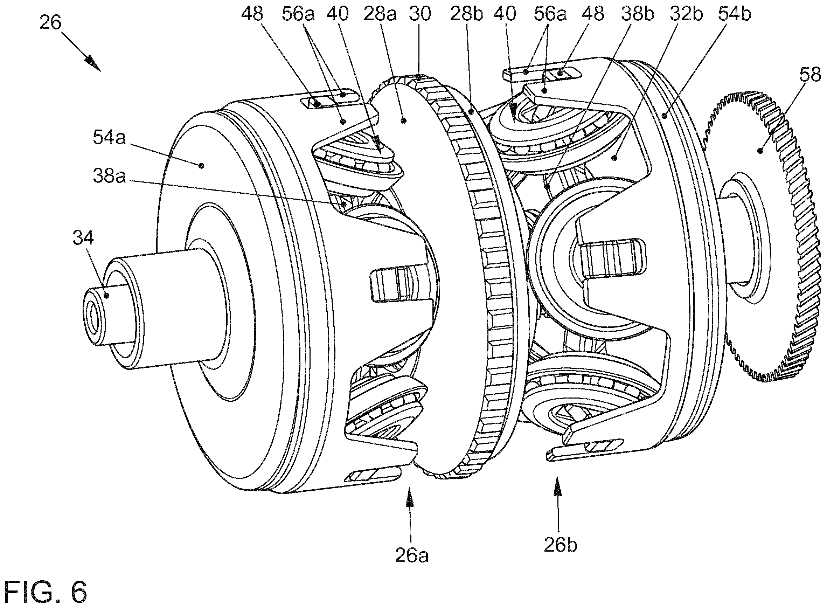

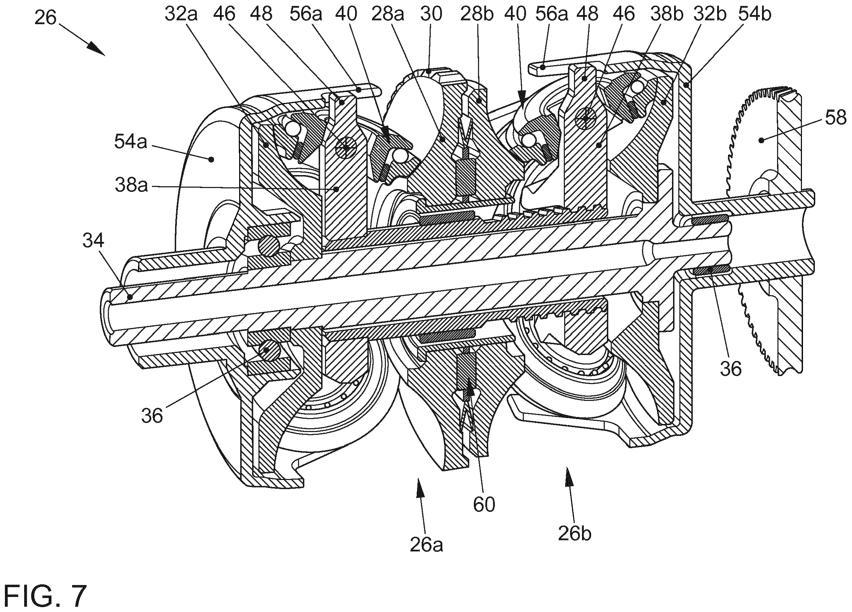

Die Schnittdarstellung von Figur 1 gibt einen Überblick über den grundlegenden Aufbau der Antriebseinheit 10. In einem Gehäuse 12 ist eine als Innenläufer gestaltete elektrische Maschine 14 mit einem gehäusefesten Stator 16 und einem radial innerhalb des Stators 16 rotierbaren Rotor 18 angeordnet. Der Rotor 18 ist bei der dargestellten Ausführungsform zusammengesetzt aus einem elektrisch wirksamen Teil 20 und einer Rotorwelle 22, die mittels der Rotorlager 24 unmittelbar (rechtes Rotorlager) bzw. mittelbar (linkes Rotorlager) gegen das Gehäuse 12 gelagert ist. Die Rotorwelle 22 dient als Eingangswelle des radial innerhalb des Rotors 18 angeordneten Traktionsgetriebes 26, welches in isolierter Form in den Figuren 6 und 7 gesondert dargestellt ist.

Das Traktionsgetriebe 26 ist aus zwei Teilgetrieben aufgebaut, nämlich dem in Figur 1 links dargestellten ersten Teilgetriebe 26a und dem in Figur 1 rechts dargestellten zweiten Teilgetriebe 26b. Die beiden Teilgetriebe 26a, 26b sind spiegelsymmetrisch zueinander aufgebaut und einander axial benachbart angeordnet. Axial innen, d.h. mittig in Figur 1, sind die Antriebs-Reibscheiben 28a, b der Teilgetriebe 26a, b positioniert. Die dem ersten Teilgetriebe 26a zugeordnete erste Antriebs-Reibscheibe 28a ist mittels einer geraden Steckverzahnung 30 mit der Rotorwelle 22 verbunden. Hierdurch wird eine drehfeste Kopplung zwischen der Rotorwelle 22 und der ersten Antriebs-Reibscheibe 28a realisiert, die jedoch eine Axialverschiebung der ersten Antriebs-Reibscheibe 28a zulässt. Axial außen, d.h. den Antriebs-Reibscheiben 28a, b in jedem Teilgetriebe 26a, b jeweils gegenüberliegend, sind Gegen-Reibscheiben 32a, b angeordnet, die bei dem erfindungsgemäßen Traktionsgetriebe 26 als Abtriebs-Reibscheiben fungieren. Die Abtriebs-Reibscheiben 32a, b sind fest mit einer Abtriebswelle 34 verbunden, die über die Abtriebswellenlager 36 mittelbar am Gehäuse 12 gelagert ist.

Zwischen den einander zugeordneten Reibscheiben jedes Teilgetriebes 26a, b ist je ein Steg 38a, b angeordnet, welcher im Wesentlichen sternförmig ausgebildet ist und an jedem seiner Stahlen einen Reibroller 40 trägt, der bei der gezeigten Ausführungsform einen Reibring 42 aufweist, der um eine Rollerachse 44 rotierbar gelagert ist und die ihm zugeordneten Antriebs- und Abtriebs-Reibscheiben 28a, b, 32a, b kraftschlüssig kontaktiert. Die Rollerachse 44 ist um eine Schwenkachse 46 schwenkbar am Steg 38a, 38b gelagert. Dabei ragen die jeweils einen Reibroller 40 tragenden Strahlen des Stegs 38a, b mit einem radialen Fortsatz 48 radial über die Schwenkachse 46 hinaus.

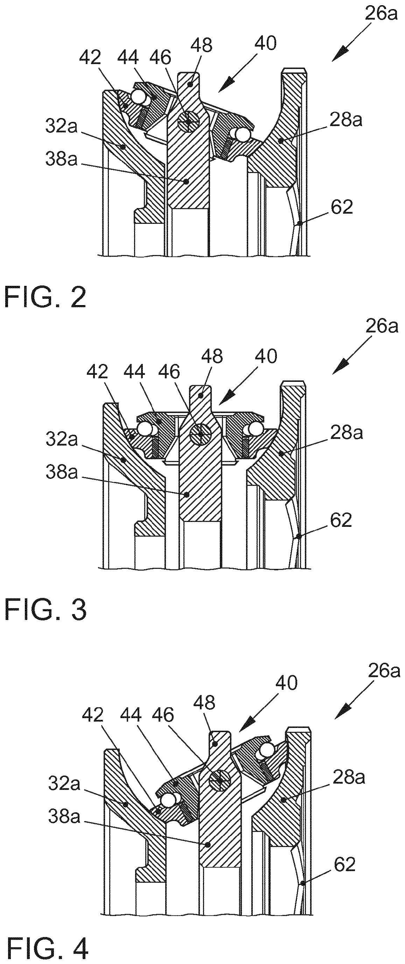

In den Figuren 2 bis 4 ist die Aufhängung eines Reibrollers 40 am ersten Steg 38a in drei unterschiedlichen Schwenkstellungen vergrößert dargestellt. In den Figuren 2 bis 4 ist auch erkennbar, dass mit jeder Verschwenkung des Reibrollers 40 eine Axialverschiebung des Stegs 38a sowie der zugeordneten Antriebs-Reibscheibe 28a relativ zum Gehäuse 12 bzw. zur gehäusefesten Abtriebs-Reibscheibe 32a verbunden ist. Diese Axialverschiebungen sind erforderlich, um den Kraftschluss zwischen den Reibscheiben 28a, 32a und dem Reibroller 40 aufrecht zu erhalten. Die mit dieser Verschwenkung und Axialverschiebung einhergehende Übersetzungsänderung im Teilgetriebe 26a zwischen dessen Antriebs-Reibscheibe 28a und seiner Abtriebs-Reibscheibe 32a ist für den Fachmann ohne weiteres erkennbar.

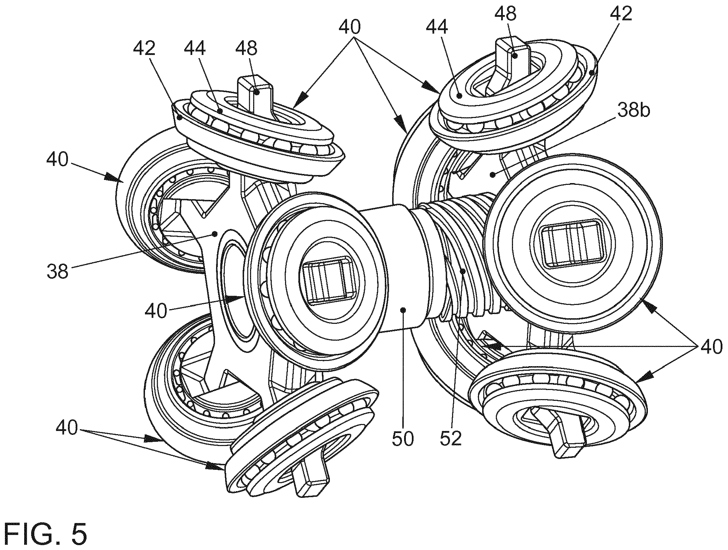

Selbstverständlich ist es erforderlich, dass in beiden Teilgetrieben 26a, b besagte Übersetzungsänderungen synchron verlaufen. Daher sind die beiden Stege 38a, b mittels einer gemeinsamen Steghülse 50 miteinander verbunden. Bei der gezeigten Ausführungsform ist der erste Steg 38a fest mit der Steghülse 50 verbunden, während der zweite Steg 38b ein Innengewinde trägt, welches auf einen Außengewindeabschnitt 52 der Steghülse 50 aufgeschraubt ist. Die als Hohlwelle ausgebildete Steghülse 50 umgreift die Abtriebswelle 34 koaxial und erfährt über die Reibroller 40 eine Radiallagerung. Axial ist sie hingegen nicht fixiert, sondern relativ zum Gehäuse 12 verschieblich. Eine solche Axialverschiebung der Steghülse 50 hat also eine gleichgerichtete Verschiebung der Stege 38a, b zur Folge, wohingegen eine Relativrotation der Stege 38a, b zueinander aufgrund der Gewindekopplung 52 zu einer Abstandsänderung zwischen den Stegen 38a, b führt. Die beiden Stege 38a, b samt Reibrollern 40 und gemeinsamer Steghülse 50 sind in Figur 5 nochmals isoliert dargestellt.

Um eine Relativverdrehung der Stege 38a, b zu bewirken, wie dies zum Zwecke einer Übersetzungsänderung vorgesehen ist, weist das Traktionsgetriebe 26 im Bereich seines ersten Teilgetriebes 26a eine Fixierhülse 54a und im Bereich seines zweiten Teilgetriebes 26b eine Stellhülse 54b auf. Diese sind in den Figuren 6 und 7, die zwei Darstellungen des isolierten Traktionsgetriebes 26 zeigen, besonders deutlich erkennbar. Die Fixierhülse 54a ist fest mit dem Gehäuse 12 verbunden und trägt bei der gezeigten Ausführungsform das linke Rotorwellenlager 24. Die Fixierhülse 54a umgreift die erste Abtriebs-Reibscheibe 32a von axial außen her und weist nach radial innen erstreckte Fixierfinger 56a auf, mittels welcher die Fortsätze 48 des ersten Stegs 38a drehfixiert werden, wobei jedoch die Axialverschieblichkeit des Stegs 38a nicht behindert wird. Die Stellhülse 54b im Bereich des zweiten Teilgetriebes 26b ist entsprechend aufgebaut und positioniert, allerdings nicht drehfest mit dem Gehäuse 12 gekoppelt. Vielmehr ist sie über ein Stellrad 58 mit einem in den Figuren nicht dargestellten Stellantrieb verbunden. Mittels dieses Stellantriebs kann also eine gezielte Rotation des zweiten Stegs 38b relativ zum ersten Steg 38a und damit eine gezielte Abstandsänderung der Stege 38a, b zueinander bewirkt werden.

Um hieraus eine gezielte Übersetzungsänderung zu generieren, bedarf es einer kompensierenden Axialverschiebung der beiden Antriebs-Reibscheiben 28a, b, sodass der Kraftschluss zwischen den Reibscheiben 28a, b, 32a, b und den Reibrollern 40 in jedem Teilgetriebe erhalten bleibt. Der Fachmann wird erkennen, dass eine derart kompensierende Axialverschiebung der Antriebs-Reibscheiben 28a, b eine entsprechend kompensierende Axialverschiebung der Steghülse 52 und somit eine Selbstzentrierung der Stege 38a, b innerhalb ihres jeweiligen Teilgetriebes 26a, b bewirkt.

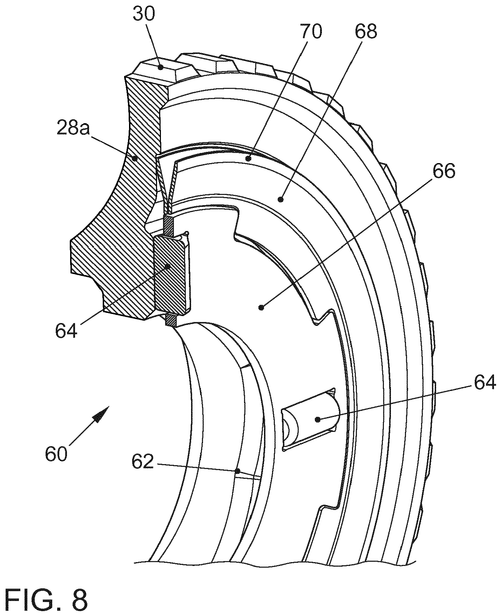

Zur Realisierung der kompensierenden Axialverschiebung der Antriebs-Reibscheiben 28a, b ist eine momentenabhängige Wälzkörper/Rampen-Kupplung 60 zwischen den Antriebs-Reibscheiben 28a, b vorgesehen, die insbesondere in Figur 8 besonders deutlich illustriert ist. Die Aufgabe der Kupplung 60 ist zum einen die Übertragung des Rotor-Drehmomentes von der ersten Antriebs-Reibscheibe 28a auf die zweite Antriebs-Reibscheibe 28b und zum anderen die vorgenannte, kompensierende Axialverschiebung der Antriebs-Reibscheiben 28a, b relativ zueinander bzw. relativ zu den ihnen jeweils zugeordneten Abtriebs-Reibscheiben 32a, b. Hierzu sind die Antriebs-Reibscheiben 28a, b an ihren einander zugewandten Flächen jeweils mit einem in Umfangsrichtung variierenden Rampenprofil 62 versehen. In Figur 8 ist lediglich das Rampenprofil 62 der ersten Antriebs-Reibscheibe 28a dargestellt. An den Rampenprofilen 62 liegen Wälzkörper 64 an, die bei der gezeigten Ausführungsform in einem separaten Käfig 66 um eine radiale Drehachse drehbar gelagert sind. Bei der gezeigten Ausführungsform haben die Wälzkörper 64 die Form von Walzen. Kugelförmige Wälzkörper sind ebenso denkbar. Je nach Relativlage der Berge und Täler der Rampenprofile 62 einerseits und der Wälzkörper 64 andererseits ändert sich der Abstand der Antriebs-Reibschreiben 28a, b zueinander. Die hierfür notwenige Relativverdrehung der Antriebs-Reibscheiben 28a, b ist abhängig von dem übertragenen Moment, welches insbesondere durch die von den Reibrollern auf die Antriebs-Reibscheiben 28a, b eingebrachte Anpresskraft bestimmt wird. Der Käfig 66 ist mit einer ringscheibenförmigen Tellerfederanordnung 68 verzahnt, die sich beidseitig an den Antriebs-Reibscheiben 28a, b abstützt und diese in Richtung der jeweils zugeordneten Abtriebs-Reibscheiben 32a, b vorspannt. Hierdurch wird eine Grundspannung in jedem Teilgetriebe 26a, b erzeugt, die undefinierte Zustände oder ein Durchrutschen beim Anfahren vermeidet. Zur Verschleißminderung weist die Tellerfederanordnung 68 an ihren ringförmigen Anlageflächen an den Antriebs-Reibscheiben 28a, b je eine Gleitbeschichtung 70 auf. Durch die Verzahnung des Käfigs 66 mit der Tellerfederanordnung 68 kann der Totweg bei einer Momentenumkehr zwischen den Antriebs-Reibscheiben 28a, b besonders gering gehalten werden.

Der Fachmann wird verstehen, dass das Traktionsgetriebe, wie es sich insbesondere in den Figuren 6 und 7 darstellt, als außen axial- und radialkräftefreie Einheit darstellt, da sämtliche axiale und radiale Kraftkomponenten einander im Inneren des Getriebes 26 aufheben. Es werden daher allein Drehmomente ein- und ausgeleitet, sodass ein modularer Einbau ohne besondere Abstützungen im Gehäuse ermöglicht wird.
Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Antriebseinheit
- 12: Gehäuse
- 14: elektrische Maschine
- 16: Stator
- 18: Rotor
- 20: elektrisch wirksamer Teil von 18
- 22: Rotorwelle
- 24: Rotorwellenlager
- 26: Traktionsgetriebe
- 26a: erstes Teilgetriebe von 26
- 26b: zweites Teilgetriebe von 26
- 28a: erste Antriebs-Reibscheibe
- 28b: zweite Antriebs-Reibscheibe
- 30: Steckverzahnung
- 32a: erste Gegen-Reibscheibe, erste Abtriebs-Reibscheibe
- 32b: zweite Gegen-Reibscheibe, zweite Abtriebs-Reibscheibe
- 34: Abtriebswelle
- 36: Abtriebswellenlager
- 38a: erster Steg
- 38b: zweiter Steg
- 40: Reibroller
- 42: Reibring
- 44: Rollerachse
- 46: Schwenkachse
- 48: radialer Fortsatz
- 50: Steghülse
- 52: Außengewinde
- 54a: Fixierhülse
- 54b: Stellhülse
- 56a: Fixierfinger
- 56b: Stellfinger
- 58: Stellrad
- 60: Wälzkörper/Rampen-Kupplung
- 62: Rampenprofil
- 64: Wälzkörper
- 66: Käfig
- 68: Tellerfederanordnung
- 70: Gleitfläche

## Patentansprüche

1. Traktionsgetriebe mit einem ersten und einem zweiten Teilgetriebe (26a, b), die spiegelsymmetrisch zueinander aufgebaut und axial benachbart in einem Gehäuse (12) angeordnet sind, jeweils umfassend
- eine axial innere Antriebs-Reibscheibe (28a, b) und eine axial äußere Gegen-Reibscheibe (32a, b), die koaxial angeordnet und relativ zueinander um eine Getriebe-Zentralachse rotierbar sind, sowie
- einen Satz zwischen den Reibscheiben (28a, b, 32a, b) kraftschlüssig kontaktierter Reibroller (40), die rotierbar um jeweils eine Rollerachse (44) gelagert sind, wobei die Rollerachsen (44) an einem in Bezug auf die Getriebe-Zentralachse axial bewegbaren, sternförmigen Steg (38a, b), radial von der Getriebe-Zentralachse beabstandet schwenkgelagert sind,
**wobei**
- die Gegen-Reibscheiben (32a, b) fest auf einer gemeinsamen, axial fest und rotierbar im Gehäuse gelagerten Abtriebswelle (34) angeordnet sind,
- der Abstand der Antriebs-Reibscheiben (28a, b) voneinander mittels einer Abstand-Stelleinrichtung (60) variierbar ist und
- die Steghülse (50) relativ zum Gehäuse (12) axial verschieblich gelagert ist,
wobei der dem ersten Teilgetriebe (26a) zugeordnete, erste Steg (38a) drehfest mit dem Gehäuse (12) verbunden ist, der dem zweiten Teilgetriebe (26b) zugeordnete, zweite Steg (38b) mittels einer Winkellagen-Stelleinrichtung (54b, 58) relativ zum Gehäuse (12) verdrehbar ist und die die Stege (38a, b) koppelnde Gewindepaarung (52) derart eingerichtet ist, dass eine Relativverdrehung der Stege (38a, b) eine Änderung deren Abstandes bewirkt,
**dadurch gekennzeichnet, dass**
die Stege (38a, b) auf einer gemeinsamen Steghülse (50) angeordnet und über genau eine axial erstreckte Gewindepaarung (52) abstandsvariabel miteinander gekoppelt sind.

2. Traktionsgetriebe nach Anspruch 1,
**dadurch gekennzeichnet,**
**dass** die Steghülse (50) als in sich drehstarre Einheit ausgebildet ist und im Bereich eines Teilgetriebes (26b) ein Außengewinde (52) trägt, auf welchem der zugeordnete Steg (26b), der ein korrespondierendes Innengewinde trägt, aufgeschraubt ist.

3. Traktionsgetriebe nach Anspruch 2,
**dadurch gekennzeichnet,**
**dass** dasjenige Teilgetriebe (26b), in dessen Bereich die Steghülse (50) das Außengewinde (52) trägt, das zweite Teilgetriebe (26b) ist.

4. Traktionsgetriebe nach einem der vorangehenden Ansprüche,
**dadurch gekennzeichnet,**
**dass** die Winkellagen-Stelleinrichtung (54b, 58) eine mit einem Stellantrieb gekoppelte, zur Getriebezentralachse koaxiale Stellhülse (54b) aufweist, die drehbeweglich am Gehäuse (12) gelagert ist, die zugeordnete Gegen-Reibscheibe (32b) von axial außen her umgreift und nach axial innen erstreckte Stellfinger (56b) aufweist, die paarweise zwischen sich je einen über das Schwenklager einer Rollerachse (44) radial hinausragenden Fortsatz (48) des zugeordneten Stegs (38b) drehfixieren.

5. Traktionsgetriebe nach einem der vorangehenden Ansprüche,
**dadurch gekennzeichnet,**
**dass** eine der Antriebs-Reibscheiben (28a) eine Koppeleinrichtung (30) zur Kopplung dieser Antriebs-Reibscheibe (28a) mit einem Antriebsaggregat (14) trägt und über eine drehmomentübertragende Kupplungseinrichtung (60) mit der anderen Antriebs-Reibscheibe (28b) verbunden ist.

6. Traktionsgetriebe nach Anspruch 5,
**dadurch gekennzeichnet,**
**dass** die Kupplungseinrichtung und die Abstand-Stelleinrichtung gemeinsam als eine Wälzkörper/Rampen-Kupplung (60) ausgebildet sind.

7. Traktionsgetriebe nach Anspruch 6,
**dadurch gekennzeichnet,**
**dass** wenigstens eine der Antriebs-Reibscheiben (28a, b) an ihrer der anderen Antriebs-Reibscheibe (28a, b) zugewandten Fläche ein in Umfangsrichtung variierendes Rampenprofil (62) aufweist und dass zwischen den Antriebs-Reibscheiben (28a, b) ein ringscheibenförmiger Käfig (66) gelagert ist, an dem eine Mehrzahl von an dem Rampenprofil (62) anliegenden, um jeweils eine radiale Wälzachse rotierbaren Wälzkörpern (64) gelagert ist.

8. Traktionsgetriebe nach einem der vorangehenden Ansprüche,
**dadurch gekennzeichnet,**
**dass** die Antriebs-Reibscheiben (28a, b) mittels einer zwischen ihnen angeordneten, sich beidseitig gegen sie abstützenden Federeinrichtung (68) in Richtung der jeweils zugeordneten Gegen-Reibscheiben (32a, b) vorgespannt sind.

9. Traktionsgetriebe nach Anspruch 8,
**dadurch gekennzeichnet,**
**dass** die Federeinrichtung als ringscheibenförmige Tellerfederanordnung (68) ausgebildet ist.

10. Traktionsgetriebe nach Anspruch 7 und 9,
**dadurch gekennzeichnet,**
**dass** die Tellerfederanordnung (68) eine Innenverzahnung aufweist, in die eine korrespondierende Außenverzahnung des Käfigs (66) eingreift.

11. Traktionsgetriebe nach einem der vorangehenden Ansprüche,
**dadurch gekennzeichnet,**
**dass** die Reibflächen der Reibscheiben (28a, b, 32a, b) sowie der Roller (40) derart geformt sind, dass sich unabhängig von der Schwenkstellung der Roller (40) die Mantellinien der beiden Kontaktpunkte jedes Rollers (40) eines Teilgetriebes (26a, b) mit der jeweiligen Rollerachse (44) und der Getriebe-Zentralachse in einem Punkt schneiden.

12. Antriebseinheit für ein Kraftfahrzeug, umfassend eine elektrische Maschine (14) mit einem Stator (16) und einem radial innerhalb des Stators (16) drehbeweglich gelagerten Rotor (18) sowie ein Traktionsgetriebe (26)
**dadurch gekennzeichnet,**
**dass** das Traktionsgetriebe (26) nach einem der Ansprüche 5 oder 6 bis 11, soweit rückbezogen auf Anspruch 5 ausgebildet ist und der Rotor (18) eine Innensteckverzahnung aufweist, die mit einer Außensteckverzahnung (30), als welche die Koppeleinrichtung des Traktionsgetriebes (26) ausgebildet ist, verzahnt ist.

## Claims

1. Traction transmission with a first and a second sub-transmission (26a, b) which are of mirror-symmetrical construction with respect to one another and are arranged axially adjacently in a housing (12), in each case comprising
- an axially inner drive friction disc (28a, b) and an axially outer mating friction disc (32a, b) which are arranged coaxially and can be rotated relative to one another about a transmission central axis, and
- a set of friction rollers (40) which make contact in a non-positive manner between the friction discs (28a, b, 32a, b) and are mounted such that they can be rotated about in each case one roller axle (44), the roller axles (44) being pivotably mounted in a manner which is spaced apart radially from the transmission central axis on a star-shaped web (38a, b) which can be moved axially in relation to the transmission central axis,
- the mating friction discs (32a, b) being arranged fixedly on a common output shaft (34) which is mounted in the housing in an axially fixed and rotatable manner,
- the spacing of the drive friction discs (28a, b) from one another being variable by means of a spacing setting device (60), and
- the web sleeve (50) being mounted such that it can be displaced axially relative to the housing (12),
the first web (38a) which is assigned to the first sub-transmission (26a) being connected to the housing (12) in a torque-proof manner, it being possible for the second web (38b) which is assigned to the second sub-transmission (26b) to be rotated relative to the housing (12) by means of an angular position setting device (54b, 58), and the thread pairing (52) which couples the webs (38a, b) being set up in such a way that a relative rotation of the webs (38a, b) brings about a change in their spacing,
**characterized in that** the webs (38a, b) are arranged on a common web sleeve (50) and are coupled to one another at a variable spacing via precisely one axially extending thread pairing (52).

2. Traction transmission according to Claim 1,
**characterized**
**in that** the web sleeve (50) is configured as an inherently torsionally rigid unit and, in the region of one sub-transmission (26b), supports an external thread (52), onto which the associated web (26b) which supports a corresponding internal thread is screwed.

3. Traction transmission according to Claim 2,
**characterized in that** that sub-transmission (26b), in the region of which the web sleeve (50) supports the external thread (52), is the second sub-transmission (26b).

4. Traction transmission according to one of the preceding claims,
**characterized**
**in that** the angular position setting device (54b, 58) has a setting sleeve (54b) which is coupled to a setting drive, is coaxial with respect to the transmission central axis, is mounted on the housing (12) such that it can be moved rotationally, engages around the associated mating friction disc (32b) from the axial outside, and has axially inwardly extending setting fingers (56b) which, between themselves in pairs, rotationally fix in each case one projection (48) of the associated web (38b), which projection (48) protrudes axially beyond the pivoting bearing of a roller axle (44) .

5. Traction transmission according to one of the preceding claims,
**characterized**
**in that** one of the drive friction discs (28a) supports a coupling device (30) for coupling the said drive friction disc (28a) to a drive unit (14), and is coupled to the other drive friction disc (28b) via a torque-transmitting coupling device (60).

6. Traction transmission according to Claim 5,
**characterized**
**in that** the coupling device and the spacing setting device are configured together as a rolling body/ramp coupling (60).

7. Traction transmission according to Claim 6,
**characterized**
**in that**, on its face which faces the other drive friction disc (28a, b), at least one of the drive friction discs (28a, b) has a ramp profile (62) which varies in the circumferential direction, and in that an annular disc-shaped cage (66) is mounted between the drive friction discs (28a, b), on which cage (66) a plurality of rolling bodies (64) are mounted which bear against the ramp profile (62) and can be rotated in each case about a radial rolling axis.

8. Traction transmission according to one of the preceding claims,
**characterized**
**in that** the drive friction discs (28a, b) are prestressed in the direction of the respectively associated mating friction discs (32a, b) by means of a spring device (68) which is arranged between them and is supported on both sides against them.

9. Traction transmission according to Claim 8,
**characterized**
**in that** the spring device is configured as an annular disc-shaped cup spring arrangement (68).

10. Traction transmission according to Claims 7 and 9,
**characterized**
**in that** the cup spring arrangement (68) has an internal spline system, into which a corresponding external spline system of the cage (66) engages.

11. Traction transmission according to one of the preceding claims,
**characterized**
**in that** the friction faces of the friction discs (28a, b, 32a, b) and of the rollers (40) are formed in such a way that, independently of the pivoting position of the rollers (40), the generating lines of the two contact points of each roller (40) of a sub-transmission (26a, b) intersect with the respective roller axle (44) and the transmission central axis at one point.

12. Drive unit for a motor vehicle, comprising an electric machine (14) with a stator (16) and a rotor (18) which is mounted such that it can be moved rotationally radially within the stator (16), and a traction transmission (26),
**characterized**
**in that** the traction transmission (26) is configured according to one of Claims 5 or 6 to 11, in so far as it refers back to Claim 5, and the rotor (18) has an internal spline system which is interlocked with an external spline system (30), as which the coupling device of the traction transmission (26) is configured.

## Revendications

1. Transmission de traction pourvue d'une première et d'une deuxième partie de transmission (26a, b) qui sont construites à symétrie de miroir l'une par rapport à l'autre et qui sont disposées de manière axialement adjacente dans un boîtier (12), les parties de transmission comprenant chacune
- un disque de friction d'entraînement axialement intérieur (28a, b) et un disque de friction homologue axialement extérieur (32a, b) qui sont disposés coaxialement et peuvent être mis en rotation l'un par rapport à l'autre sur un axe de transmission central et
- un ensemble de galets de friction (40) qui sont mis en contact par friction entre les disques de friction (28a, b, 32a, b) et qui sont chacun montés à rotation sur un axe de galet (44), les axes de galet (44) étant montés à pivotement au niveau d'une nervure (38a, b) en forme d'étoile mobile axialement par rapport à l'axe de transmission central et radialement à distance de l'axe de transmission central,
- les disques de friction homologues (32a, b) étant disposés de manière fixe sur un arbre de sortie (34) commun monté de manière axialement fixe et à rotation dans le boîtier,
- la distance des disques de friction d'entraînement (28a, b) les uns par rapport aux autres pouvant être modifiée au moyen d'un dispositif de réglage de distance (60) et
- le manchon de nervure (50) étant monté de manière à coulisser axialement par rapport au boîtier (12),
la première nervure (38a) associée à la première partie de transmission (26a) étant reliée solidairement en rotation au boîtier (12), la deuxième nervure (38b) associée à la deuxième partie de transmission (26b) pouvant tourner par rapport au boîtier (12) au moyen d'un dispositif de réglage de position angulaire (54b, 58) et l'appariement de filetages (52) accouplant les nervures (38a, b) étant adapté de telle sorte qu'une rotation relative des nervures (38a, b) entraîne une modification de leur distance,
**caractérisée en ce que**
les nervures (38a, b) sont disposées sur un manchon de nervure commun (50) et sont accouplées entre elles à distance variable par exactement un appariement de filetages (52) s'étendant axialement.

2. Transmission de traction selon la revendication 1,
**caractérisée en ce que**
le manchon de nervure (50) est conçu comme une unité rigide en rotation et porte au niveau d'une partie de transmission (26b) un filetage extérieur (52) sur lequel la nervure associée (26b), qui porte un filetage intérieur correspondant, est vissée.

3. Transmission de traction selon la revendication 2,
**caractérisée en ce que**
la partie de transmission (26b), au niveau de laquelle le manchon de nervure (50) porte le filetage extérieur (52), est la deuxième partie de transmission (26b).

4. Transmission de traction selon l'une des revendications précédentes,
**caractérisée en ce que**
le dispositif de réglage de position angulaire (54b, 58) comporte un manchon de réglage (54b) qui est accouplé à un actionneur et coaxial à l'axe de transmission central et qui est monté à rotation sur le boîtier (12), qui s'engage autour du disque de friction homologue associé (32b) axialement depuis l'extérieur et comporte des doigts de réglage (56b) s'étendant axialement vers l'intérieur qui fixent en rotation par paire entre eux un prolongement (48) de la nervure associée (38b) faisant saillie radialement au-delà du palier de pivotement d'un axe de galet (44).

5. Transmission de traction selon l'une des revendications précédentes,
**caractérisée en ce que**
l'un des disques de friction d'entraînement (28a) porte un dispositif d'accouplement (30) destiné à accoupler ce disque de friction d'entraînement (28a) à une unité d'entraînement (14) et est relié à l'autre disque de friction d'entraînement (28b) par le biais d'un dispositif d'accouplement (60) à transmission de couple.

6. Transmission de traction selon la revendication 5,
**caractérisée en ce que**
le dispositif d'accouplement et le dispositif de réglage de distance sont conçus conjointement comme un accouplement élément roulant/rampe (60).

7. Transmission de traction selon la revendication 6,
**caractérisée en ce que**
l'un au moins des disques de friction d'entraînement (28a, b) comporte sur sa surface tournée vers l'autre disque de friction d'entraînement (28a, b) un profil de rampe (62) qui varie dans la direction circonférentielle et **en ce qu'**une cage (66) en forme de disque annulaire est montée entre les disques de friction d'entraînement (28a, b), cage sur laquelle sont montés une pluralité d'éléments roulants (64) qui sont en appui sur le profil de rampe (62) et qui peuvent tourner sur un axe de roulement radial.

8. Transmission de traction selon l'une des revendications précédentes,
**caractérisée en ce que**
les disques de friction d'entraînement (28a, b) sont précontraints en direction des disques de friction homologues (32a, b), respectivement associés, au moyen d'un dispositif à ressort (68) disposé entre eux et en appui contre eux des deux côtés.

9. Transmission de traction selon la revendication 8,
**caractérisée en ce que**
le dispositif à ressort est conçu sous la forme d'un ensemble de rondelles-ressorts (68) en forme de disque annulaire.

10. Transmission de traction selon les revendications 7 et 9,
**caractérisée en ce que**
l'ensemble de rondelles-ressorts (68) comporte une denture intérieure dans laquelle s'engage une denture extérieure correspondante de la cage (66).

11. Transmission de traction selon l'une des revendications précédentes,
**caractérisée en ce que** les surfaces de friction des disques de friction (28a, b, 32a, b) et des galets (40) sont conformées de telle sorte que les lignes génératrices des deux points de contact de chaque galet (40) d'une partie de transmission (26a, b) coupent l'axe de galet respectif (44) et l'axe de transmission central en un point indépendamment de la position de pivotement des galets (40).

12. Unité d'entraînement pour véhicule automobile, laquelle comprend une machine électrique (14), pourvue d'un stator (16) et d'un rotor (18) monté à rotation radialement à l'intérieur du stator (16), et une transmission de traction (26),
**caractérisée en ce que**
la transmission de traction (26) selon l'une des revendications 5 ou 6 à 11, pour autant qu'elles renvoient à la revendication 5, est formée et le rotor (18) comporte une denture intérieure qui est en engrènement avec une denture extérieure (30) formant le dispositif d'accouplement de la transmission de traction (26).
